# EUROPEAN PATENT APPLICATION

(11) **EP 2 159 750 A1**
(43) Date of publication of application: **03.03.2010**
(21) Application number: 09010940.6
(22) Date of filing: 26.08.2009
(51) Int. Cl.: G06T 1/60

(54) **Apparatus and method for processing image data**

(30) Priority: 29.08.2008 JP 2008222010
(71) Applicant: NEC Electronics Corporation, Kawasaki, Kanagawa 211-8668 (JP)
(72) Inventor: Itoh, Kenichi, Yokohama-shi Kanagawa, 221-0056 (JP)
(74) Representative: Glawe, Delfs, Moll

(57) **Abstract**

An image data processing apparatus includes a temporary reception buffer. A reception interface section generates first write addresses and first read address for the temporary reception buffer and memory write addresses for a storage unit. When pixel data for a first block are continuously and sequentially supplied, the pixel data are stored in the temporary reception buffer in units of second blocks. The stored pixel data are read from the temporary reception buffer in units of third blocks while the pixel data for the second block are stored in the temporary reception buffer. The read pixel data for the third blocks of the second block are stored in the storage unit in units of columns of each of the third blocks.

## Description

### Background of the Invention

### 1. Field of the Invention

The present invention relates to an image data processing apparatus and an image data processing method, and more particularly, relates to an image data processing apparatus and an image data processing method, which processes image data stored in a storing unit.

### 2. Description of Related Art

An image data processing apparatus for processing image data is known. In such an image data processing apparatus, as an amount of image data becomes greater, a storing unit is replaced from SRAM (Static Random Access Memory) to DRAM (Dynamic Random Access Memory). The replacement to DRAM requires a peculiar interface and a memory access time varies depending on a storing method of the image data. Specifically, when an access is to be performed while changing a column address, the number of times of transmission of a column address strobe increases. Accordingly, overhead at a time of a memory access increases, so that the access time becomes long when the image data is read. Therefore, a technique is desired which can perform data processing on the image data stored in the storing unit at a higher speed.

Japanese Patent Application Publication (JP-P2003-337745A: a first conventional example) discloses a memory control apparatus that can shorten a read access time when pixel data arranged in a line in a column direction are continuously read and can consequently attain high speed processing of input/output of a data from/to an entire memory. The memory control apparatus contains a memory that temporarily stores image data composed of pixel data arranged in a matrix. A physical address section assigns a physical address of the memory to each pixel data, and an image storing unit stores the pixel data in the memory in accordance with the physical addresses. When assigning the physical address to a concerned pixel data, the physical address section assigns the physical address obtaining by adding one to a physical address for a pixel data previous to the concerned pixel data in a column direction. Also, the physical address section assigns the physical address obtaining by adding a predetermined offset value to a physical address for a pixel data previous to the concerned pixel data in a row direction.

Japanese Patent Application Publication (JP-P2004-171099A: a second conventional example) discloses an image data processing apparatus which alternately stores image data in a storing unit so that the image data used in a once image data process do not over column addresses. The image data processing apparatus includes an input section for inputting a data, the storing unit for storing the input data, an image processing unit for performing a window process on the data, and a control section for controlling a storing order of the data in the storing unit. When a plurality of window processes are performed on the data, the control section alternately stores the data to be processed in the storing unit prior to the window process.

However, in the image data processing apparatus in the second conventional example, the data are stored in the storing unit through a burst access in the order of reception the data. Moreover, in the image data processing apparatus, the image data are collectively stored for each row. Thus, the image data used in the window process are scattered on the column addresses. For this reason, in the image data processing apparatus, when the image data for three rows are received, the burst access to the storing unit is required three times. Thus, until the burst access is ended three times, the start of the image data process must be waited.

### Summary of the Invention

In an aspect of the present invention, an image data processing apparatus includes a temporary reception buffer. A reception interface section generates first write addresses and first read address for the temporary reception buffer and memory write addresses for a storage unit. When pixel data for a first block are continuously and sequentially supplied, the pixel data are stored in the temporary reception buffer in units of second blocks. The stored pixel data are read from the temporary reception buffer in units of third blocks while the pixel data for the second block are stored in the temporary reception buffer. The read pixel data for the third blocks of the second block are stored in the storage unit in units of columns of each of the third blocks.

In another aspect of the present invention, an image data processing method is achieved by storing, when pixel data for a first block are continuously and sequentially supplied, the pixel data in a temporary reception buffer in units of second blocks; by reading the store pixel data from the temporary reception buffer in units of third blocks while the pixel data for the second block are stored in the temporary reception buffer; and by storing the read pixel data for the third blocks of the second block in a storage unit in units of columns of each of the third blocks.

In the image data processing apparatus and the image data processing method according to the present invention, a part of an image can be fast read, which can reduce a time necessary for an image data process.

### Brief Description of the Drawings

The above and other objects, advantages and features of the present invention will be more apparent from the following description of certain embodiments taken in conjunction with the accompanying drawings, in which:
FIG. 1 is a block diagram showing an embodiment of an image data processing apparatus according to an embodiment of the present invention;
FIG. 2 is a diagram showing an image data generated and an image data in a temporary reception buffer;
FIG. 3 is a diagram showing the image data generated and the image data in the temporary reception buffer;
FIG. 4 is a diagram showing the image data generated and the image data in the temporary reception buffer;
FIG. 5 is a diagram showing the image data in the temporary reception buffer and an image data in a storage unit;
FIG. 6 is a diagram showing the image data in the temporary reception buffer and an image data in the storage unit;
FIG. 7 is a diagram showing the image data in the storage unit and the image data in a temporary processing buffer;
FIG. 8 is a diagram showing an operation until the start of an image data process in the present invention; and
FIG. 9 is a diagram showing an operation until the start of the image data process in a comparison example.

### Description of the Preferred Embodiments

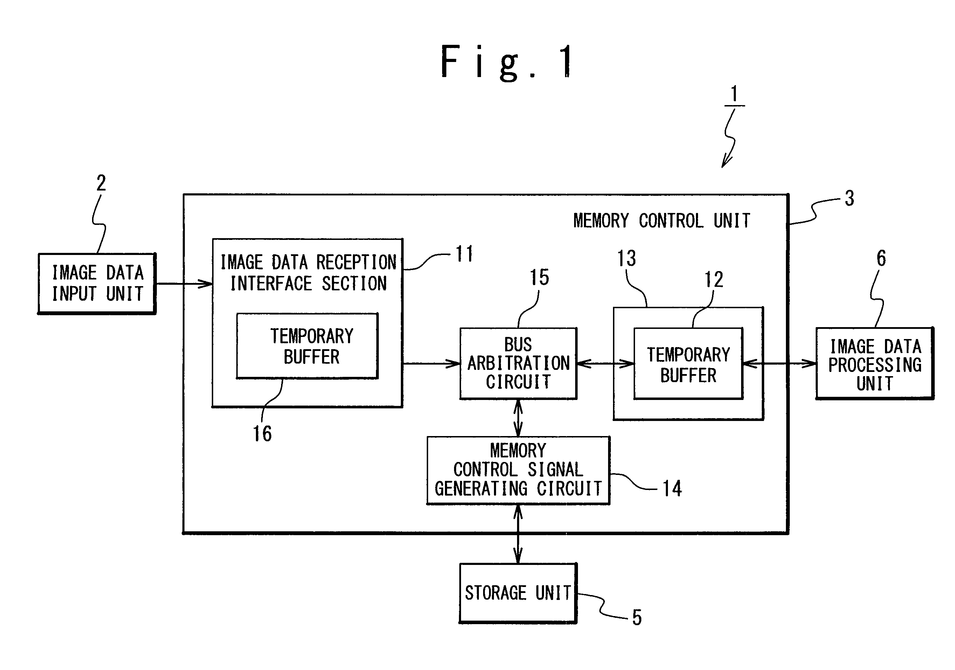

Hereinafter, an image data processing apparatus according to the present invention will be described in detail with reference to the attached drawings. The image data processing apparatus 1 contains an image data input section 2, a memory control unit 3, a storage unit 5 and an image data processing unit 6, as shown in FIG. 1. The image data input section 2 generates an image data indicating an image. The image data input section is exemplified 2 by a CCD camera. The memory control unit 3 generates various addresses to store the image data from the image data input section 2 in the storage unit 5, and outputs commands and addresses to the storage unit 5. The storage unit 5 is controlled by the memory control unit 3 and stores the image data generated by the image data input section 2. The image data processing unit 6 performs an image data process on the image data read out from the storage unit 5.

The memory control unit 3 contains an image data reception interface section 11, an image data processing interface section 13, a memory control signal generating circuit 14 and a bus arbitration circuit 15. The image data reception interface section 11 contains a temporary reception buffer 16. The temporary reception buffer 16 temporarily stores the image data supplied from the image data input section 2 and stored in the storage unit 5. The image data processing interface section 13 includes a temporary processing buffer 12. The temporary processing buffer 12 temporarily stores the image data read from the storage unit 5. The memory control signal generating circuit 14 functions as an interface to the storage unit 5 and the image data processing unit 6, and generates various control signals and addresses.

The image data reception interface section 11 generates first buffer write addresses when the image data is received from the image data input section 2, generates first buffer read addresses when the image data is read out from the temporary reception buffer 16. The image data reception interface section 11 generates and outputs to the storage unit 5, memory write addresses when the image data read from the temporary reception buffer 16 is written into the storage unit 5. At this time, the image data reception interface section 11 controls the memory control signal generating circuit 14 to generate various control signals to the storage unit. The bus arbitration circuit 15 arbitrates the use of a bus such that the memory write addresses and the image data read from the buffer 16 are transferred to the storage unit 5, when the image data read from the temporary reception buffer 16 is written into the storage unit 5.

Also, the image data processing interface section 13 generates and outputs memory read addresses to the storage unit 5, when the image data is read from the storage unit 5. Also, the image data processing interface section 13 controls the memory control signal generating circuit 14 to generate various control signals. The bus arbitration circuit 15 arbitrates the use of a bus such that the memory read addresses are transferred to the storage unit 5, and the image data are transferred from the storage unit 5 to the temporary processing buffer 12, when the image data are read from the storage unit 5. The image data processing interface section 13 generates second buffer write addresses such that the image data read from the storage unit 5 are stored in the temporary processing buffer 12.

When the image data process is executed, the image data processing interface section 13 generates second buffer read addresses to read out the image data from the temporary processing buffer 12 in response to a command from the image data processing unit 6.

In the above description, although the memory read addresses are generated by the image data processing interface section 13, the memory read addresses and the second buffer write addresses may be generated by the image data processing unit 6. In such a case, the image data processing interface section 13 may be omitted.

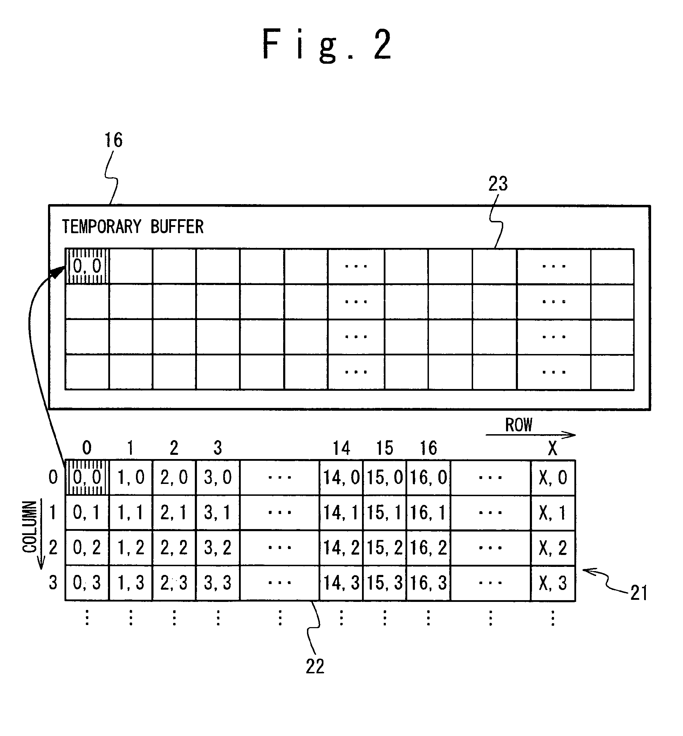

FIG. 2 shows image data 22 of an image 21 that is generated by the image data input section 2. The image 21 is composed of a plurality of pixels arranged in a matrix on X columns and Y rows, and are identified from each other in accordance with a set of a column number and a row number. At this time, the image data 22 is expressed by the plurality of pixel data (0,0) to (X,Y). That is, among the plurality of pixel data (0,0) to (X,Y), the pixel data (x,y) (x = 0, 1, 2, 3, ..., X, and y = 0, 1, 2, 3, ..., Y) is arranged at an x^{th} column and a y^{th} row. The pixel data (x,y) indicates one color arranged in the one pixel.

The image data input section 2 outputs the pixel data to the memory control unit 3 in an order starting from the pixel data whose row number is smaller, and whose column number is smaller. That is, the image data input section 2 firstly outputs the pixel data (0,0) to (X,0) to the memory control unit 3. At this time, the image data input section 2 firstly outputs the pixel data of the pixel (0,0), and then, outputs the pixel data (x+1,0) after outputting the pixel data of the pixel (x,0). After outputting the pixel data (X,0), the image data input section 2 outputs the pixel data (0,1) to (X,1) on the first row to the memory control unit 3. That is, the image data input section 2 outputs the pixel data (0,1) and then outputs the pixel data (x+1,1), after outputting the pixel data (x,1).

Then, after outputting the pixel data (x,y), the image data input section 2 outputs the pixel data (0,y+1) to (X,y+1) on the (y+1)^{th} row to the memory control unit 3. At this time, the image data input section 2 outputs the pixel data in the order starting from the pixel whose column number is smaller. That is, the image data input section 2 outputs the pixel data (0,y+1) and outputs the pixel data (x+1,y+1) after outputting the pixel data (x,y+1). Just after outputting the pixel data (X,Y), the image data input section 2 ends the operation for outputting the pixel data to the memory control unit 3.

FIG. 2 further shows the temporary reception buffer 16. The temporary reception buffer 16 contains a plurality of storage areas (0,0) to (X,3). At this time, X is equal to the maximum column number of the plurality of pixel data (0,0) to (X,Y) of the image data 22. Each of the plurality of storage areas (0,0) to (X,3) stores one of the pixel data of the image data 22 generated by the image data input section 2.

As shown in FIGS, 2 to 4, the image data reception interface section 11 stores the pixel data outputted from the image data input section 2 in predetermined areas of the storage areas (0,0) to (X,3) as image data 23. That is, when the pixel data are supplied from the image data input section 2 to the memory control unit 3, the image data reception interface section 11 firstly stores the head pixel data in the storage area (0,0). The image data reception interface section 11 stores the image data next to the image data which is stored in the storage area (x,0), in the storage area (x+1,0). The image data reception interface section 11 stores the image data next to the image data, which is stored in the storage area (X,0), in the storage area (0,1). The image data reception interface section 11 stores the image data next to the image data, which is stored in the storage area (x,1), in the storage area (x+1, 1). The image data reception interface section 11 stores the image data next to the image data, which is stored in the storage area (X,1), in the storage area (0,2). The image data reception interface section 11 stores the image data next to the image data, which is stored in the storage area (x,2), in the storage area (x+1,2). The image data reception interface section 11 stores the image data next to the image data, which is stored in the storage area (X,2), in the storage area (0,3). The image data reception interface section 11 stores the image data next to the image data, which is stored in the storage area (x,3), in the storage area (x+1,3). The image data reception interface section 11 stores the image data next to the image data, which is stored in the storage area (X,3), in the storage area (0,0). Thus, the above operation is repeated.

Moreover, after storing the pixel data in the storage areas (x',3) (x' = 3, 7, ..., (4i-1), ..., X and i are natural numbers), the image data reception interface section 11 writes the pixel data, which have been stored in the storage areas (x'-3,0), (x'-3,1), (x'-3,2), (x'-3,3), (x'-2,0), (x'-2,1), (x'-2,2), (x'-2,3), (x'-1,0), (x'-1,1), (x'-1,2), (x'-1,3), (x',0, (x',1), (x',2) and (x',3), through 4 burst accesses in the storage unit 5. That is, the plurality of pixel data are divided into four data groups. The pixel data stored in the storage areas (x'-3,0), (x'-3,1), (x'-3,2) and (x'-3,3) are grouped as a first data group of the four data groups. The pixel data stored in the storage areas (x'-2,0), (x'-2,1), (x'-2,2) and (x'-2,3) are grouped as a second data group of the four data groups. The pixel data stored in the storage areas (x'-1,0), (x'-1,1), (x' -1, 2) and (x'-1,3) are grouped into a third data group of the four data groups. The pixel data stored in the storage areas (x',0), (x',1), (x',2) and (x',3) are grouped into a fourth data group of the four data groups.

The storage unit 5 contains a plurality of physical storage areas. The plurality of physical storage areas are identified from each other on the basis of a set of column address and column address. As the storage unit 5, SDRAM (Synchronous DRAM) is exemplified. Storage areas for one row among the plurality of physical storage areas are sufficiently large such that the image data 23 of a partial image of the image 21 corresponding to four rows can be stored. The storage unit 5 can store a series of image data groups transferred through the burst access in the storage areas for one row of the plurality of physical storage areas. Moreover, the storage unit 5 can output the image data group stored in the storage areas for one row of the plurality of physical storage areas through the burst access.

The storage unit 5 stores an image data in response to column address strobes that are outputted by the memory control signal generating circuit 14 and column addresses outputted from the reception interface section 11. The column address indicates one of data groups of column addresses. A column address is updated in response to the column address strobe. The image data 23 are stored in the physical storage areas for a predetermined consecutive number from the physical storage area identified by the column address and the row address. The column address of the storage area is changed in response to the column address strobe.

The image data processing method according to the present invention is performed by the image data processing apparatus, and contains an operation for writing the image data in the storage unit 5 and an operation for reading the image data stored in the storage unit 5.

The operation of writing the image data in the storage unit 5 is started when the image data input section 2 reads the image 21 therein. When reading the image 21, the image data input section 2 firstly outputs the pixel data (0,0) to (X,0) on the 0^{th} row of the image data 22 to the memory control unit 3. At this time, the image data input section 2 outputs the pixel data in an order starting from the pixel data whose column number is smaller. That is, as shown in FIGS. 2 to 6, the image data input section 2 outputs the pixel data (0,0) and outputs the pixel data (x+1, 0) after outputting the pixel data (x,0). After outputting the pixel data corresponding to the pixel (X,0), the image data input section 2 outputs the pixel data (0,1) to (X,1) on the first row to the memory control unit 3. At this time, the image data input section 2 outputs the pixel data (0,1), and outputs the pixel data (x+1, 0), after outputting the pixel data (x,1).

After outputting the pixel data (X,y), the image data input section 2 outputs the pixel data (0,y+1) to (X,y+1) on the (y+1)^{th} row to the memory control unit 3. At this time, the image data input section 2 outputs the pixel data (0,y+1), and outputs the pixel data (x,y+1) and then outputs the pixel data (x+1,y+1). Just after outputting the pixel data (X,Y), the image data input section 2 ends the operation for outputting the pixel data to the memory control unit 3.

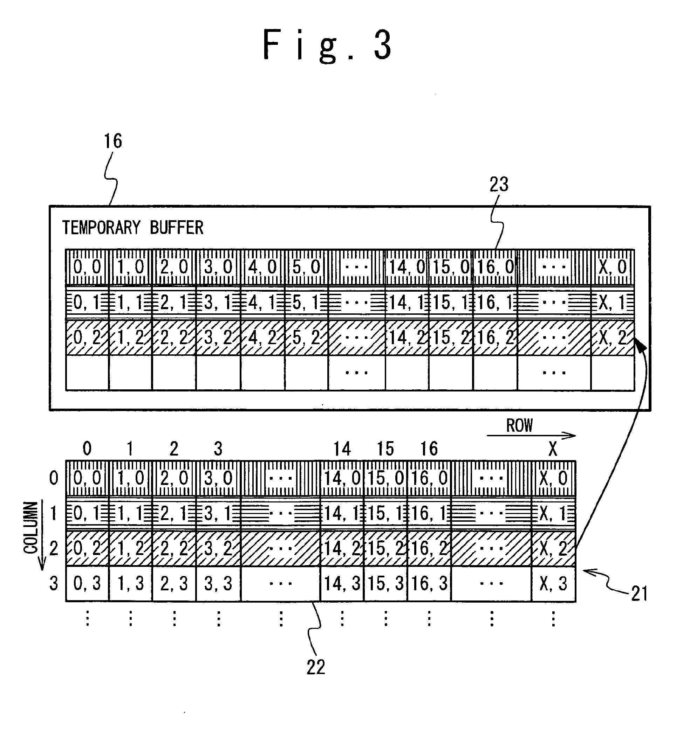

The image data reception interface section 11 stores the pixel data outputted from the image data input section 2 in predetermined areas of the plurality of storage areas (0, 0) to (X,3) of the temporary reception buffer 16. That is, when the pixel data are supplied from the image data input section 2 to the memory control unit 3, the image data reception interface section 11 generates the first write addresses and stores the pixel data firstly outputted among the pixel data in the storage area (0,0), as shown in FIG. 2. That is, FIG. 2 shows a situation that the temporary reception buffer 16 stores the first pixel data. The image data reception interface section 11 stores the pixel data outputted next to the pixel data, which is stored in the storage area (x,0), in the storage area (x+1,0). The image data reception interface section 11 stores the pixel data outputted next to the pixel data, which is stored in the storage area (X,0), in the storage area (0,1). The image data reception interface section 11 stores the image data outputted next to the image data, which is stored in the storage area (x,1), in the storage area (x+1,1). The image data reception interface section 11 stores the pixel data outputted next to the pixel data, which is stored in the storage area (X,1), in the storage area (0,2). The image data reception interface section 11 stores the pixel data next to the pixel data, which is stored in the storage area (x,2), in the storage area (x+1,2). The image data reception interface section 11 stores the pixel data next to the pixel data, which is stored in the storage area (X,2), in the storage area (0,3), as shown in FIG. 3.

The image data reception interface section 11 stores the image data next to the image data, which is stored in the storage area (x,3), in the storage area (x+1,3).

Moreover, after storing the pixel data in the storage areas (x',3) (x' = 3, 7, ..., (3i-1, ..., X and i are the natural numbers), the image data reception interface section 11 stores the pixel data which are stored in the storage areas (x'-3,0), (x'-3,1), (x'-3,2), (x'-3,3), (x'-2,0), (x'-2,1), (x'-2,2), (x'-2,3), (x'-1,0), (x'-1,1), (x'-1,2), (x'-1,3), (x',0), (x',1), (x',2) and (x',3), through the 4 burst accesses in the storage unit 5. That is, the stored pixel data are divided into the four data groups. The pixel data stored in the storage areas (x'-3,0), (x'-3,1), (x'-3,2) and (x'-3,3) are grouped into a first data group of the four data groups. The pixel data stored in the storage areas (x'-2,0), (x'-2,1), (x'-2,2) and (x'-2,3) are grouped into a second data group of the four data groups. The pixel data stored in the storage areas (x'-1,0), (x'-1,1), (x'-1,2) and (x'-1,3) are grouped into a third data group of the four data groups. The pixel data stored in the storage areas (x',0), (x',1), (x',2) and (x',3) are groups into a fourth data group of the four data groups.

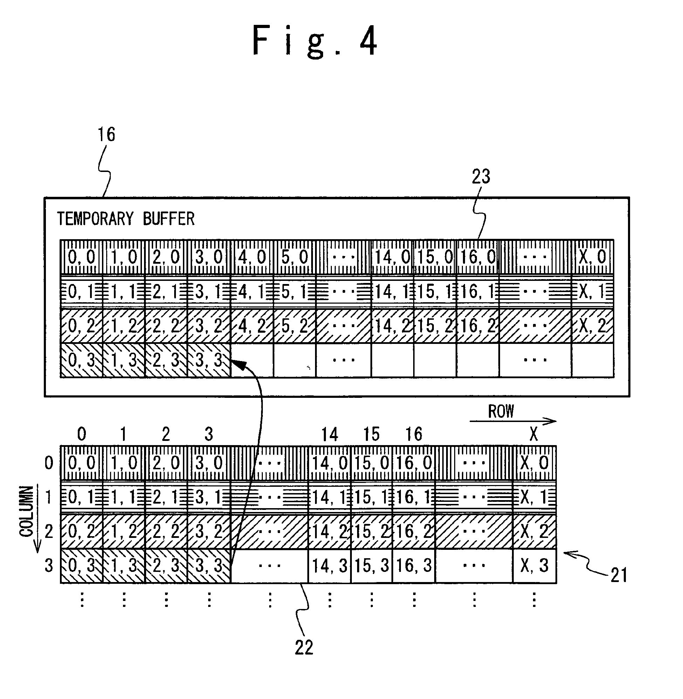

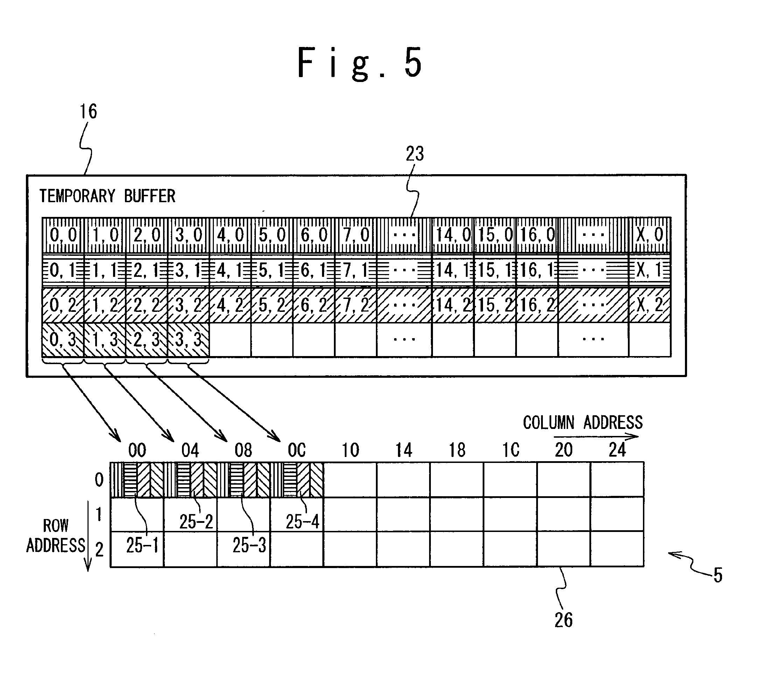

That is, after storing the pixel data in the storage area (3,3), as shown in FIG. 4, the image data reception interface section 11 stores the pixel data, which are stored in the storage areas (0,0), (0,1), (0,2), (0,3), (1,0), (1,1), (1,2), (1,3), (2,0), (2,1), (2,2), (2,3), (3,0), (3,1), (3,2) and (3,3), via the memory control signal generating circuit 14 and the bus arbitration circuit 15 in the storage unit 5 by the 4 burst accesses, as shown in FIG. 5. That is, the pixel data are grouped into four data groups 25-1 to 25-4 in units of columns. The first data group 25-1 is composed of the pixel data stored in the storage areas (0,0), (0,1), (0,2) and (0,3). The second data group 25-2 is composed of the pixel data stored in the storage areas (1,0), (1,1), (1,2) and (1,3). The third data group 25-3 is composed of the pixel data stored in the storage areas (2,0), (2,1), (2,2) and (2,3). The fourth data group 25-4 is composed of the pixel data stored in the storage areas (3,0), (3,1), (3,2) and (3, 3) .

The storage unit 5 contains a plurality of physical storage areas (00,0) to (R,C), as shown in FIG. 5. Each of the plurality of physical storage areas (00,0) to (R,C) can store four pixel data of the image data 22 generated by the image data input section 2. When the four image data 25-1 to 25-4 are generated by the image data reception interface section 11, the storage unit 5 stores the first data group 25-1 in the physical storage area (00,0), stores the second data group 25-2 in the physical storage area (04,0), stores the third data group 25-3 in the physical storage area (08,0) and stores the fourth data group 25-4 in the physical storage area (0C,0).

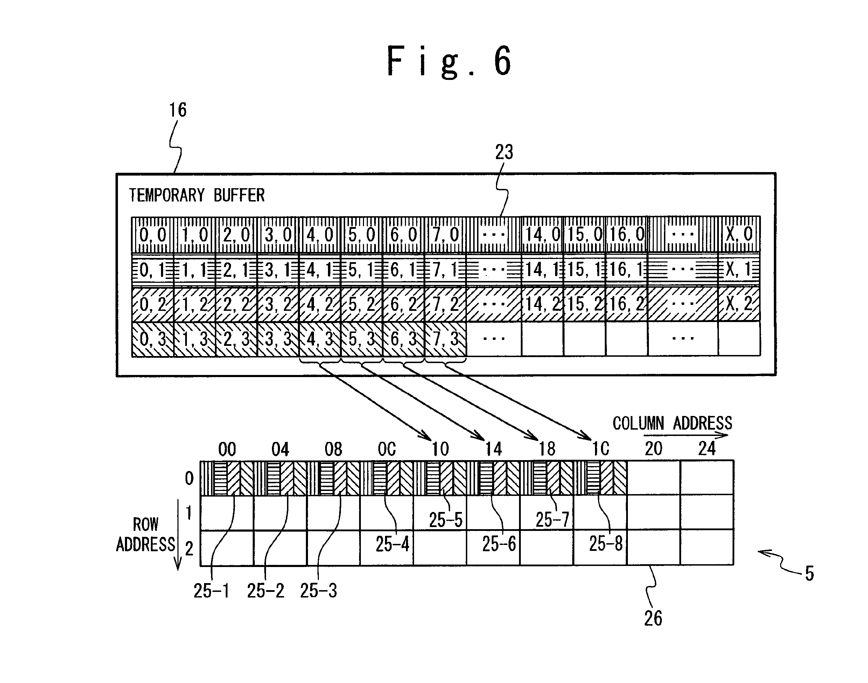

After storing the pixel data in the storage area (7,3), as shown in FIG. 6, the image data reception interface section 11 stores the pixel data, which are stored in the plurality of storage areas (4,0), (4,1), (4,2), (4,3), (5,0), (5,1), (5,2), (5,3), (6,0), (6,1), (6,2), (6,3), (7,0), (7,1), (7,2) and (7,3), via the memory control signal generating circuit 14 and the bus arbitration circuit 15 through the 4 burst accesses in the storage unit 5. That is, the stored pixel data are grouped into four data groups 25-5 to 25-8. The pixel data stored in the storage areas (4,0), (4,1), (4,2) and (4,3) are grouped into a fifth data group 25-5. The pixel data stored in the storage areas (5,0), (5,1), (5,2) and (5,3) are grouped into a sixth data group 25-6. The pixel data stored in the storage areas (6,0), (6,1), (6,2) and (6,3) are grouped a seventh data group 25-7. The pixel data stored in the storage areas (7,0), (7,1), (7,2) and (7,3) are grouped into an eighth data group 25-8.

When the four data groups 25-5 to 25-8 are generated by the image data reception interface section 11, the storage unit 5 stores the fifth data group 25-5 in the physical storage area (10,0), stores the sixth data group 25-6 in the physical storage area (14,0), stores the seventh data group 25-7 in the physical storage area (18,0) and stores the eighth data group 25-8 in the physical storage area (1C,0), as shown in FIG. 6. That is, the storage unit 5 stores the data groups, which indicates a partial image arranged in one column × four rows of the image 21, in one of physical storage areas (00,0) to (R,C) of one row. The storage unit 5 further stores a partial image data, which indicates a partial image arranged in four columns × four rows in the image 21, in the four physical storage areas among the physical storage areas (00,0) to (R,C) of the one row. The four plural physical storage areas are of one row, and the four column addresses are consecutive in the four plural physical storage areas. The storage unit 5 further stores the image data for four rows in the physical storage areas among the physical storage areas (00,0) to (R,C) for one row.

The image data reception interface section 11 stores the pixel data, which is outputted next to the pixel data stored in the storage area (X,3), in the storage area (0,0). That is, the image data reception interface section 11 stores the pixel data for the four rows of the image data 22 in the storage unit 5. According to the above operation, the temporary reception buffer 16 is not required to store the entire image data 22 of the image 21. Thus, a capacity of buffer 16 can be designed to be smaller than an amount of the entire image data of the image 21, and the capacity of the buffer 16 can be designed to be equal to the amount of the pixel data for the four rows. As this result, the image data processing apparatus 1 can be manufactured at a cheaper cost.

In the operation for performing image processing on the image data stored in the storage unit 5, the image data processing unit 6 firstly selects an image data process target region on which the image data process is performed, and outputs to the image data processing interface section 13. The processing interface section 13 generates memory read addresses and a command and output to the storage unit 5 through the bus arbitration circuit 15 and the control signal generating circuit 14. The memory control signal generating circuit 14 outputs the column address strobes to the storage unit 5 together with the column addresses of the image data process target region. The column address indicates the column address of one physical storage area in the physical storage areas (00,0) to (R,C). The partial image data including the data of the image data process target region are stored in the column addresses. The column address strobe indicates the physical storage areas in the column address.

The partial image data, which have been stored in the four consecutive physical storage areas from one group physical storage area, are read out from the storage unit 5 to the temporary processing buffer 12. The temporary processing buffer 12 stores the partial image data. The image data processing unit 6 extracts pixel data in an image data process target region from the partial image data stored in the temporary processing buffer 12 and performs the image data process on the extracted pixel data.

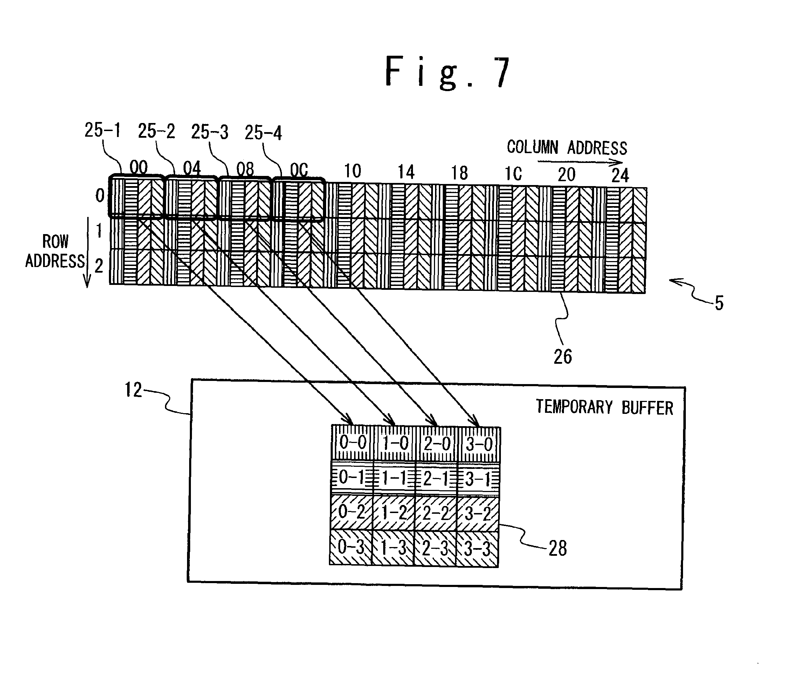

When a region of 4 columns × 4 rows from the upper left pixel data (0,0) is selected as the pixel data in the image data process target region, as shown in FIG. 7, the partial image data composed of the four data groups 25-1 to 25-4 is stored in the temporary processing buffer 12. That is, at this time, the column address is supplied to the storage unit 5 to indicate the column address of the physical storage area (00,0) that stores the data group 25-1 and the memory control signal generating circuit 14 outputs the column address strobes to indicate the column addresses of the physical storage areas (00,0) to (03, 0), to the storage unit 5.

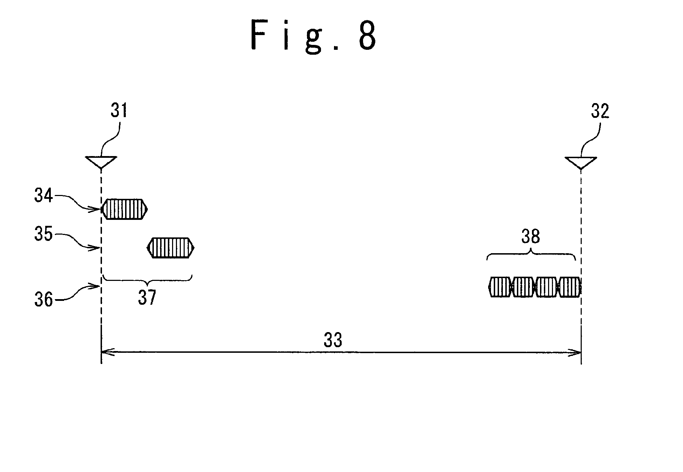

FIG. 8 shows transmission timings of a column address strobe 34, a column address strobe 35 and a data 36, when the region of 4 columns × 4 rows from the upper left pixel data (0,0) is selected as the pixel data in the image data process target region, in case that DDR2 SDRAM is used as the storage unit 5. At this time, the memory control signal generating circuit 14 outputs the column address strobe 34 and the column address strobe 35 as a command 37, to the storage unit 5, after a time 31 when the image data process is requested. After receiving the command 37, the storage unit 5 outputs one 4 burst data 38. The image data processing apparatus 1 starts the image data process, after a time 32 when the output of the 4 burst data 38 is ended.

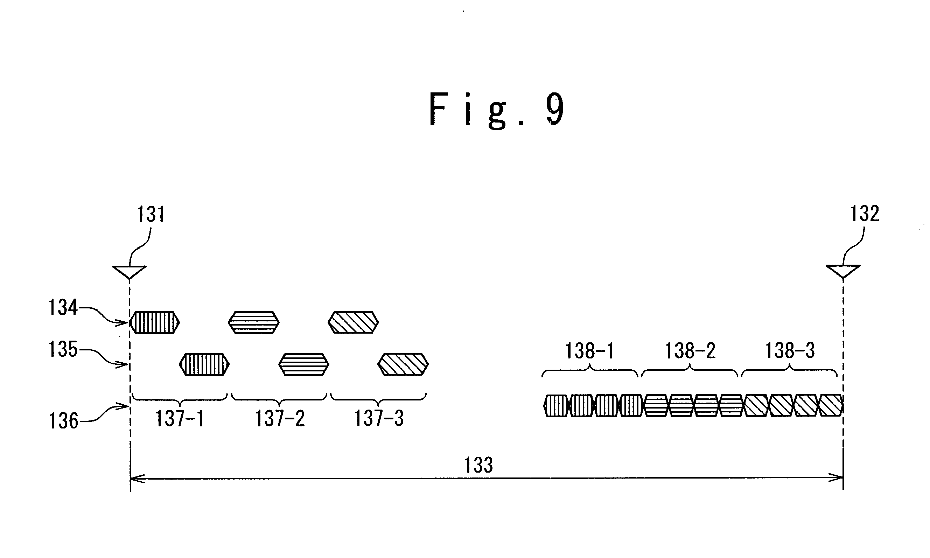

FIG. 9 shows transmission timings of a column address strobe 134, a column address strobe 135 and a data 136, when the region of 4 columns × 4 rows from the upper left pixel data (0,0) is selected as the pixel data in the image data process target region, in a comparison example of the image data processing apparatus according to the present invention. In the comparison example, the operation of the image data reception interface section 11 in the above-mentioned embodiment is replaced with a different image data reception interface section. The image data reception interface section stores the image data in the storage unit 5 so that the pixel data on one row of the image 21 are stored in the plurality of physical storage areas (00,0) to (R,C) for one row.

At this time, the memory control signal generating circuit 14 in the comparison example outputs three commands 137-1 to 137-3, which are composed of the column address strobe 134 and the column address strobe 135, to the storage unit 5 after a time 131 when the image data process is requested. After receiving the commands 137-1 to 137-3, the storage unit 5 outputs three 4 burst data 138-1 to 138-3 as pixel data 136. In the comparison example, after a time 132 when the outputs of the three 4 burst data 138-1 to 138-3 are ended, the image data process is started.

A time period 33 between the time 31 and the time 32 according to the image data processing method according to the present invention can be reduced for the number of the commands and the number of the 4 burst data, as compared with a time period 133 between the time 131 and the time 132 according to the comparison example. As a result, in the image data processing apparatus 1, the time when the image data process is performed on a part of the image 21 can be reduced.

In the image data processing apparatus 1, when the image data process target region is included in the plurality of partial image data, a plurality of commands are outputted to the storage unit 5 from the memory control signal generating circuit 14, and the plurality of 4 burst data are outputted to the temporary processing buffer 12 from the storage unit 5. Also, in this case, in the image data processing apparatus 1, similarly to the case that the image data process target region is included in one partial image data, as compared with the comparison example, the number of the commands and the number of the 4 burst data can be reduced, and the time when the image data process is performed on the part of the image 21 can be reduced.

It should be noted that in the image data processing apparatus 1, it can be transferred from the storage unit 5 to the temporary processing buffer 12 in a unit that differs from the partial image data of 4 columns × 4 rows. As the unit, the partial image data in which the column address starts from the physical storage area except the multiples of 10 (00, 10, 20, ...) is exemplified. Even if such units are employed, similarly to the above-mentioned embodiment, the number of the commands and the number of the 4 burst data can be reduced, and the time when the image data process is performed on the part of the image 21 can be reduced.

It should be noted that in the image data processing apparatus 1, the image data reception interface section 11 can store the partial image data of the partial image of 4 columns × 4 rows in the storage unit 5 through the other transferring different from the 4 burst access. As the storing, it is exemplified to store in the storage unit 5 in the data unit of the image of 1 column × 4 rows or to store in the storage unit 5 in the data unit of the image of 8 columns × 4 rows. In the image data processing apparatus 1, even if the above storing is employed, similarly to the above-mentioned embodiment, the number of the commands and the number of the 4 burst data can be reduced, and the time when the image data process is performed on the part of the image 21 can be reduced.

## Claims

1. An image data processing apparatus comprising:
a temporary reception buffer; and
a reception interface section configured to generate first write addresses and first read address for said temporary reception buffer and memory write addresses for a storage unit, such that when pixel data for a first block are continuously and sequentially supplied, said pixel data are stored in said temporary reception buffer in units of second blocks, said stored pixel data are read from said temporary reception buffer in units of third blocks while said pixel data for the second block are stored in said temporary reception buffer, and said read pixel data for said third blocks of said second block are stored in said storage unit in units of columns of each of said third blocks.

2. The image data processing apparatus according to claim 1, further comprising:
a temporary processing buffer; and
a processing interface section configured to generate memory read addresses for said storage unit and second write addresses for said temporary processing buffer, such that said stored pixel data are read from said storage unit in units of the columns of each of said third blocks, and said read pixel data are stored in said temporary processing buffer in units of said third blocks.

3. The image data processing apparatus according to claim 1 or 2, wherein said second block is smaller than said first block and has a same number of columns, and said third block is smaller than said second block.

4. The image data processing apparatus according to claim 3, wherein said third block has a same number of rows as said second block.

5. The image data processing apparatus according to any of claims 1 to 4, wherein said reception interface section performs burst transfer of said pixel data for said third blocks of said second block.

6. The image data processing apparatus according to claim 2, wherein said processing interface section performs burst transfer of said pixel data for said third blocks of said second block.

7. The image data processing apparatus according to any of claims 1 to 6, wherein said pixel data for said third blocks of said second block are stored in a same row of said storage unit.

8. An image data processing method comprising:
storing, when pixel data for a first block are continuously and sequentially supplied, said pixel data in a temporary reception buffer in units of second blocks;
reading said store pixel data from said temporary reception buffer in units of third blocks while said pixel data for the second block are stored in said temporary reception buffer; and
storing said read pixel data for said third blocks of said second block in a storage unit in units of columns of each of said third blocks.

9. The image data processing method according to claim 8, further comprising:
reading said stored pixel data from said storage unit in units of the columns of each of said third blocks;
storing said read pixel data in a temporary processing buffer in units of said third blocks; and
performing an image process on said pixel data stored in said temporary processing buffer.

10. The image data processing method according to claim 8, wherein said second block is smaller than said first block and has a same number of columns, and said third block is smaller than said second block.

11. The image data processing method according to claim 10, wherein said third block has a same number of rows as said second block.

12. The image data processing method according to any of claims 8 to 11, wherein said storing said read pixel data for said third blocks comprises:
performing burst transfer of said pixel data for said third blocks of said second block.

13. The image data processing method according to claim 9, wherein said reading said stored pixel data from said storage unit comprises:
performing burst transfer of said read pixel data for said third blocks of said second block.

14. The image data processing method according to any of claims 8 to 13, wherein said pixel data for said third blocks of said second block are stored in a same row of said storage unit.

15. A computer-readable recording medium in which a computer-executable program code is recorded to cause a computer to attain an image data processing method according to any of claims 8 to 14.
